# EUROPEAN PATENT SPECIFICATION

(11) **EP 3 283 446 B1**
(45) Date of publication and mention of the grant of the patent: **29.09.2021**
(21) Application number: 16719459.6
(22) Date of filing: 13.04.2016
(51) Int. Cl.: C03C 17/25, B60J 1/00, C03C 17/34

(54) **COATED GLAZING**
BESCHICHTETES GLAS
VITRAGE REVÊTU

(30) Priority: 13.04.2015 GB 201506244
(43) Date of publication of application: 21.02.2018
(73) Proprietor: Pilkington Group Limited, Nr. Ormskirk Lancashire L40 5UF (GB)
(72) Inventor: VARMA, Karikath Sukumar, Southport Merseyside PR8 2BE (GB); HURST, Simon James, Runcorn Cheshire WA7 1QW (GB)
(74) Representative: Hazzard, Alan David
(86) International application number: PCT/GB2016/051028
(87) International publication number: WO 2016/166527

(56) References cited:
- DE-A1- 4 112 632
- US-A- 5 358 739
- US-A1- 2011 244 153
- US-B1- 6 974 629

## Description

This invention relates to a coated glazing, a method of manufacturing said glazing and the use of a layer based on silica and/or an organo silica deposited on a glazing to achieve a coefficient of kinetic friction between an exterior surface of the layer based on silica and/or an organo silica and a contact surface wiping means that does not substantially change between a dry state and a wet state of said surfaces. Also disclosed is a glazing suitable for combination with a wiping means, the combination of said glazing with a wiping means and the use of said glazing to facilitate a reciprocating motion of a part of a wiping means and/or to facilitate a tilting and/or flipping of a part of a wiping means.

As vehicles become quieter through the use of better engines, stop/start technology and electric propulsion there is a need for quieter windscreen and rear window (also known as a backlight) wipers. Such wipers must fulfil their primary function of keeping the window clean, with high light transmission. There is also a desire to extend the lifetime of wiper blades to greater than 3 years. Additionally, it would be beneficial to improve the tilting and/or flipping of wiper blades at the ends of arcs in which the blades may travel.

It is known from US 6974629 B1 to sputter deposit a silica layer on top of a pyrolytically deposited dielectric layer on a glass article that may be a vehicle windscreen. This coating combination is said to render the surface of glass resistant to soiling and staining. However, there is no mention of how to meet the other aforementioned desires.

DE 4112632 A discloses a stain-proofing substance formed on a substrate, comprising an amorphous monomolecular film of a cured film-forming agent selected from a cold curing polysilazane or polysiloxane.

It would therefore be attractive to provide a glazing that can alleviate or overcome at least some of the problems associated with glazings that are used in combination with wipers.

According to a first aspect of the present invention there is provided a coated glazing comprising:
a transparent substrate directly or indirectly coated on a major surface thereof with at least one layer based on silica and/or an organo silica,
wherein the at least one layer based on silica and/or an organo silica has a thickness of at least 5 nm but at most 45 nm, and
wherein the at least one layer based on silica and/or an organo silica is obtained by partially or completely converting at least one layer based on one or more silazane.

The inventors have surprisingly found that by depositing a layer based on a silazane on a transparent substrate and subsequently converting said layer based on a silazane to a layer based on silica and/or an organo silica with a thickness of from 5 nm to 45 nm, a number of advantageous properties are afforded. For instance, the coefficient of kinetic friction between an exterior surface of the layer based on silica and/or an organo silica and a contact surface of a rubber blade of a wiper does not substantially change between a dry state and a wet state. A significant commercial driver for vehicle and windscreen blade manufacturers is for the blade to make minimal noise on the windscreen both when wet and when dry. This is particularly important since vehicles are becoming less noisy with electric engines and stop/start technology. Furthermore, said coefficient of kinetic friction is in the range 0.4-0.6 which is beneficial in terms of noise reduction, water removal efficiency, and smoothness of travel, resulting in reduced wiper blade erosion and extended lifetime. Moreover, the coating is durable, including scratch resistant and hydrophobic which can improve water removal and desoiling.

In the context of the present invention one or more surfaces are in a "dry state" if there is not a film of moisture upon any of said surfaces. In the context of the present invention one or more surfaces are in a "wet state" if there is a film of moisture upon at least one of said surfaces. In the context of the present invention the term "does not substantially change" means that the value of the preceding characteristic does not change by more than 20%, preferably by more than 15%, more preferably by more than 10%, even more preferably by more than 7.5%, even more preferably by more than 5%, even more preferably by more than 2.5%, most preferably by more than 1%.

In the following discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

In the context of the present invention, where a layer is said to be "based on" a particular material or materials, this means that the layer predominantly consists of the corresponding said material or materials, which means typically that it comprises at least about 50 at.% of said material or materials.

In the context of the present invention a transparent material or a transparent substrate is a material or a substrate that is capable of transmitting visible light so that objects or images situated beyond or behind said material can be distinctly seen through said material or substrate.

Preferably said at least one layer based on one or more silazane has a thickness of at least 10 nm, more preferably at least 15 nm, even more preferably at least 20 nm, most preferably at least 23 nm; but preferably at most 40 nm, more preferably at most 35 nm, even more preferably at most 30 nm, most preferably at most 27 nm. These preferred thicknesses provide further benefits, upon partial or complete conversion of the at least one layer based on one or more silazane, in terms of less change in the coefficient of friction of an exterior surface of the layer based on silica and/or an organo silica and a blade (such as a rubber blade) of a wiper between a dry state and a wet state. Thinner layers are advantageous for cost reasons. Preferably the thickness is a quarter wavelength for improved anti-reflection and light transmission.

Preferably said at least one layer based on silica and/or an organo silica has a thickness of at least 10 nm, more preferably at least 15 nm, even more preferably at least 20 nm, most preferably at least 23 nm; but preferably at most 40 nm, more preferably at most 35 nm, even more preferably at most 30 nm, most preferably at most 27 nm. As referred to above, these preferred thicknesses provide further benefits in terms of less change in the coefficient of friction of an exterior surface of the layer based on silica and/or an organo silica and a blade (such as a rubber blade) of a wiper between a dry state and a wet state. Thinner layers are advantageous for cost reasons. Preferably the thickness is a quarter wavelength for improved anti-reflection and light transmission.

Said silazane may be one or more of tetramethyldisilazane, hexamethyldisilazane, hexamethylcyclotrisilazane, diethyltetramethyldisilazane, trimethyltrivinylcyclotrisilazane, tetramethyldiphenyldisilazane, and/or dimethyltetraphenyldisilazane. Preferably said silazane is a polysilazane and/or an oligomeric silazane. Said polysilazane may be perhydropolysilazane and/or an organopolysilazane such as a polymethylsilazane and/or a polydimethylsilazane. Polysilazanes are polymers in which silicon and nitrogen atoms alternate to form a backbone. Within the backbone each silicon atom is bound to two separate nitrogen atoms and each nitrogen atom to two silicon atoms, therefore both chains and rings of the formula [R1R2Si―NR3]ₙ can occur. R1-R3 can be hydrogen atoms or organic substituents. If all R substituents are H atoms, the polymer is designated as perhydropolysilazane (also known as polyperhydridosilazane or inorganic polysilazane, [H₂Si―NH]ₙ). If hydrocarbon substituents are bound to the silicon atoms, the polymers are designated as organopolysilazanes. Molecularly, polysilazanes [R1R2Si―NH]ₙ are isoelectronic with and close relatives to polysiloxanes [R1R2Si―O]ₙ (silicones). Preferably said polysilazane is a perhydropolysilazane and/or a polydimethylsilazane. In some embodiments the polysilazane may be a poly-metallo-silazane and/or a silazane copolymer.

Preferably the polysilazane has a number average molecular weight of 200 to 500,000 g/mol, more preferably 1000 to 200,000 g/mol, even more preferably 2000 to 100,000 g/mol. The polysilazane may have a density of 0.5 to 1.5 g/cm³, preferably of 0.7 to 1.3 g/cm³, more preferably of 0.8 to 1.2 g/cm³, even more preferably of 0.5 to 1.5 g/cm³.

Said silica and/or organo silica may be polymeric. Said organo silica may have the formula {-SiO(R₁)-O-}ₙ where R₁ comprises an alkyl and/or phenyl moiety. Alternatively, said organo silica may have the formula {-Si(R₁)(R₂)-O-}ₙ where each of R₁ or R₂ comprise alkyl and/or phenyl moieties. Said alkyl and/or phenyl moieties may comprise from one to ten carbon atoms, preferably from one to five carbon atoms. Said alkyl moieties may comprise methyl, ethyl, propyl, butyl, pentyl and/or hexyl groups, and/or polymerisable groups such as alkenes (e.g. vinyl groups), and/or carbonyl groups. Said organo silica may have the formula {-Si(CH₃)₂-O-}ₙ.

An exterior surface of the at least one layer based on silica and/or an organo silica may have an arithmetical mean height of the surface value, Sa, of preferably at least 0.3 nm, more preferably at least 1 nm, even more preferably at least 3 nm, most preferably at least 5 nm, but preferably at most 15 nm, more preferably at most 10 nm, even more preferably at most 9 nm, even more preferably at most 8 nm, most preferably at most 7 nm. Sa gives an indication of the roughness of a surface. These preferred values help to reduce noise, improve water cleaning efficiency, and enhance the travel of a wiper blade. The consequent smoother action of a wiper blade decreases the wear on both an exterior surface of the coated glazing, and on the wiper blade, e.g. a rubber wiper blade.

The coefficient of kinetic friction between an exterior surface of the layer based on silica and/or an organo silica and a contact surface of a wiping means, in a wet and/or dry state, at a force of 10-110mN and at a speed of 600mm/s, is preferably at least 0.1, more preferably at least 0.2, even more preferably at least 0.3, most preferably at least 0.4, but preferably at most 10, more preferably at most 5, even more preferably at most 1, even more preferably at most 0.8, most preferably at most 0.6. Preferably the coefficient of kinetic friction between an exterior surface of the layer based on silica and/or an organo silica and a contact surface of a wiping means, does not change between a wet and a dry state by more than 50%, more preferably by more than 30%, even more preferably by more than 20%, even more preferably by more than 10%, most preferably by more than 5%. Preferably said coefficient of kinetic friction is measured at a force of 10-110mN and at a speed of 600mm/s. Said surface of a wiping means may be at least part of a blade of a wiper. Preferably said surface of a wiping means may comprise an elastomer. Said elastomer may be a rubber, such as a synthetic or natural rubber. The synthetic rubber may comprise EPDM rubber (ethylene propylene diene monomer (M-class) rubber). Said elastomer may be coated, for example said elastomer may be coated with graphite. Said elastomer may be blended with a non-elastomer, for instance said elastomer may be blended with graphite.

The transparent substrate may be directly or indirectly coated with an underlayer, wherein said underlayer is located between said major surface of the transparent substrate and said at least one layer based on silica and/or an organo silica. Preferably said transparent substrate is in direct contact with said underlayer. Preferably said underlayer is in direct contact with said at least one layer based on silica and/or an organo silica.

The underlayer preferably comprises at least one layer based on a transparent conductive coating (TCC). Preferably the TCC is a transparent conductive oxide (TCO). Preferably the TCO is one or more of fluorine doped tin oxide (SnO₂:F), zinc oxide doped with aluminium, gallium or boron (ZnO:Al, ZnO:Ga, ZnO:B), indium oxide doped with tin (ITO), cadmium stannate, ITO:ZnO, ITO:Ti, In₂O₃, In₂O₃―ZnO (IZO), In₂O₃:Ti, In₂O₃:Mo, In₂O₃:Ga, In₂O₃:W, In₂O₃:Zr, In₂O₃:Nb, In₂₋₂ₓMₓSnₓO₃ with M being Zn or Cu, ZnO:F, Zn_{0.9}Mg_{0.1}O:Ga, (Zn,Mg)O:P, ITO:Fe, SnO₂:Co, In₂O₃:Ni, In₂O₃:(Sn,Ni), ZnO:Mn, and/or ZnO:Co.

Preferably each layer of the at least one layer based on a TCC has a thickness of at least 20 nm, more preferably at least 100 nm, even more preferably at least 200 nm, even more preferably at least 250 nm, most preferably at least 300 nm; but preferably at most 600 nm, more preferably at most 450 nm, even more preferably at most 370 nm, most preferably at most 350 nm. These thicknesses are preferred in order to strike a balance between the properties of 1) conductivity 2) absorption (the thicker the layer the more absorption and the lower the transmission) and 3) colour suppression (certain thicknesses are better for obtaining a neutral colour).

Preferably the underlayer further comprises at least one further layer, wherein said at least one further layer is based on an oxide of a metal or of a metalloid, such as SiO₂, SnO₂, TiO₂, silicon oxynitride and/or aluminium oxide. One layer of said at least one layer based on an oxide of a metal or of a metalloid is preferably located in direct contact with said major surface of said transparent substrate. Additionally, or alternatively, one layer of said at least one layer based on an oxide of a metal or of a metalloid is preferably located in direct contact with the layer based on a TCC. Such a layer based on an oxide of a metal or of a metalloid may act as a blocking layer to prevent the diffusion of sodium ions to the surface, which can be a source of corrosion, or it may act as a colour suppression layer to suppress iridescent reflection colours resulting from variations in the thicknesses of the layers.

Preferably each layer of the at least one further layer based on an oxide of a metal or of a metalloid has a thickness of at least 5 nm, more preferably at least 10 nm, even more preferably at least 15 nm, most preferably at least 20 nm; but preferably at most 100 nm, more preferably at most 50 nm, even more preferably at most 40 nm, most preferably at most 30 nm.

In some embodiments the underlayer preferably comprises, in sequence from the transparent substrate,
at least one layer based on SnO₂,
at least one layer based on SiO₂, and
at least one layer based on SnO₂:F,
wherein the at least one layer based on SnO₂ has a thickness of at least 15 nm, but at most 35 nm,
wherein the at least one layer based on SiO₂ has a thickness of at least 15 nm, but at most 35 nm, and
wherein the at least one layer based on SnO₂:F has a thickness of at least 300 nm, but at most 600 nm.

Preferably the at least one layer based on SnO₂ has a thickness of at least 20 nm, more preferably at least 23 nm, even more preferably at least 24 nm, but preferably at most 30 nm, more preferably at most 27 nm, even more preferably at most 26 nm.

Preferably the at least one layer based on SiO₂ has a thickness of at least 20 nm, more preferably at least 23 nm, even more preferably at least 24 nm, but preferably at most 30 nm, more preferably at most 27 nm, even more preferably at most 26 nm.

Preferably the at least one layer based on SnO₂:F has a thickness of at least 320 nm, more preferably at least 330 nm, even more preferably at least 335 nm, but preferably at most 400 nm, more preferably at most 360 nm, even more preferably at most 350 nm, even more preferably at most 345 nm.

In some embodiments the underlayer preferably comprises, in sequence from the transparent substrate:
a lower anti-reflection layer,
a silver-based functional layer; and
at least one further anti-reflection layer.

The lower and/or further anti-reflection layer may comprise at least one dielectric layer based on an (oxy)nitride of Si and/or an (oxy)nitride of Al and/or alloys thereof; and/or based on a metal oxide such as an oxide of one or more of Ti, Zr, Zn, Sn, In, and/or Nb, such as an oxide of Zn and Sn. Said dielectric layers may preferably have a thickness of at least 1 nm, more preferably at least 2 nm, even more preferably at least 5 nm, most preferably at least 10 nm; but preferably at most 70 nm, more preferably at most 50 nm, even more preferably at most 40 nm, most preferably at most 30 nm.

The at least one further anti-reflection layer preferably further comprises at least one barrier layer. Preferably said barrier layer is located in direct contact with the silver-based functional layer. Preferably said barrier layer is based on NiCr, Nb, Ti, Zr, Zn, Sn, In, and/or Cr and/or their oxides and/or nitrides. The at least one barrier layer may preferably have a total thickness of at least 0.5 nm, more preferably at least 1 nm, even more preferably at least 3 nm, most preferably at least 5 nm; but preferably at most 12 nm, more preferably at most 10 nm, even more preferably at most 8 nm, most preferably at most 7 nm. These preferred thicknesses enable further ease of deposition and improvement in optical characteristics such as haze whilst retaining mechanical durability.

In some embodiments the underlayer comprises more than one silver-based functional layer. For example, the underlayer may comprise two, three or more silver-based functional layers. When the underlayer comprises more than one silver-based functional layer, each silver-based functional layer may be spaced apart from an adjacent silver-based functional layer by a central anti-reflection layer.

The transparent substrate is preferably a glass pane. Alternatively the transparent substrate may be a polymeric sheet. The glass pane may be a clear metal oxide-based glass pane. Preferably the glass pane is a clear float glass pane, preferably a low iron float glass pane. By clear float glass, it is meant a glass having a composition as defined in BS EN 572-1 and BS EN 572-2 (2004). For clear float glass, the Fe₂O₃ level by weight is typically 0.11%. Float glass with an Fe₂O₃ content less than about 0.05% by weight is typically referred to as low iron float glass. Such glass usually has the same basic composition of the other component oxides i.e. low iron float glass is also a soda-lime-silicate glass, as is clear float glass. Typically low iron float glass has less than 0.02% by weight Fe₂O₃. Alternatively the glass pane is a borosilicate-based glass pane, an alkali-aluminosilicate-based glass pane, or an aluminium oxide-based crystal glass pane. The glass pane may be toughened to an extent by any suitable means such as a thermal and/or chemical toughening process. The coated glazing may curved and/or bent. Preferably the coated glazing is a vehicle glazing, such as a vehicle windscreen or a vehicle backlight.

According to a second aspect of the present invention there is provided a method of manufacturing a coated glazing comprising:
depositing at least one layer based on one or more silazane on a major surface of a transparent substrate,
partially or completely converting the at least one layer based on one or more silazane to at least one layer based on silica and/or an organo silica,
wherein the at least one layer based on silica and/or an organo silica has a thickness of at least 5 nm but at most 45 nm.

Preferably said at least one layer based on one or more silazane is deposited by spin coating, slot die coating, spraying such as flame spray coating, roller coating, dipping, and/or printing. Most preferably the at least one layer based on one or more silazane is deposited by spraying. Preferably prior to deposition the silazane is solvated or suspended in a liquid. Preferably said liquid comprises one or more hydrocarbon solvent. Said hydrocarbon solvent may comprise aliphatic and/or aromatic moieties. Said hydrocarbon solvent may be halogenated. Said solvent may comprise one or more of dibutylether, xylene, toluene, benzene, chloroform, and dichloromethane.

Said partial or complete conversion of the at least one layer based on one or more silazane to at least one layer based on silica and/or an organo silica may comprise treating the transparent substrate with heat, UV radiation and/or IR radiation after depositing the at least one layer based on one or more silazane.

Said heat treatment may comprise heating the transparent substrate after depositing the at least one layer based on one or more silazane at at least 100°C, preferably at least 200°C, even more preferably at least 300°C, even more preferably at least 350°C, most preferably at least 450°C, but preferably at most 1000°C, more preferably at most 800°C, even more preferably at most 700°C, even more preferably at most 600°C, most preferably at most 550°C. These preferred temperatures help ensure that the at least one layer based on one or more silazane, which may have been deposited as a liquid, is cured to form a well adhered solid coating. Temperatures of at least 300°C help ensure complete transformation of the silazane to silica and/or an organo silica.

Preferably said heat treatment comprises heating the transparent substrate at said temperature for at least 30 min, more preferably at least 45 min, even more preferably at least 1 hr, most preferably at least 90 min, but preferably at most 5 hr, more preferably at most 4 hr, even more preferably at most 3 hr. Such time periods help ensure complete transformation to silica and/or an organo silica.

Preferably said heat treatment further comprises heating the transparent substrate to said temperature over a period of at least 20 min, more preferably at least 40 min, even more preferably at least 50 min, most preferably at least 1 hr. Heating the transparent substrate gradually to the desired temperature over such preferred minimum time periods helps avoid rapid solvent loss and the formation of defects.

Said UV and/or IR radiation treatment may comprise exposing the layer based on one or more silazane to UV and/or IR radiation. Said UV and/or IR treatment may comprise exposing said layer to UV and/or IR radiation for at least 3 min, more preferably at least 5 min, even more preferably at least 7 min, most preferably at least 9 min, but preferably at most 1 hr, more preferably at most 30 min, even more preferably at most 20 min, most preferably at most 15 min. Such time periods help ensure complete transformation to silica and/or an organo silica. The UV radiation may be UVA, UVB and/or UVC radiation. Preferably the UV radiation is UVC radiation.

According to a third aspect of the present invention there is provided the use of a layer based on silica and/or an organo silica deposited on a transparent substrate to achieve a coefficient of kinetic friction between an exterior surface of the layer based on silica and/or an organo silica and a contact surface of a part of a wiping means that does not substantially change between a dry state and a wet state of said surfaces.

Preferably said coefficient of kinetic friction is measured at a force of 10-110mN and at a speed of 600mm/s.

According to a fourth aspect of the present invention there is provided a glazing suitable for combination with a wiping means, comprising:
a transparent substrate having a major surface,
wherein, when combined with said wiping means, said major surface contacts said wiping means,
wherein, in use, said wiping means wipes a first area of said major surface as a result of a part of said wiping means moving between a first position and a second position in a reciprocating motion,
wherein, when said part of said wiping means is in the first position and/or when said part of said wiping means is in the second position, said part contacts a second area of said major surface, and
wherein the coefficient of kinetic friction between a contact surface of said part of said wiping means and said major surface located in at least part of said second area of said major surface is higher than the coefficient of kinetic friction between a contact surface of said part of said wiping means and said major surface located in at least part of said first area that does not occupy the same area as said at least part of said second area.

By ensuring that the coefficient of kinetic friction between the major surface of the substrate and a contact surface of the part of the wiping means is higher in at least part of the second area (i.e. within the area that the part of the wiping means contacts the major surface in the first position and/or the second position) than in any non-overlapping part of the first area (i.e. any non-overlapping part of the area of the major surface that the wiping means may contact in use) the reciprocating (i.e. to-and-fro) motion of the part of the wiping means is facilitated. This facilitation is achieved because the higher friction experienced by the contact surface of the part of the wiping means in the second area assists with the change of direction that the part undergoes. Furthermore, to ensure maximum wiping performance, at least a section of the part of the wiping means that contacts the major surface may tilt and/or flip when the part changes direction. Such tilting and/or flipping is promoted by this invention.

Preferably said coefficient of kinetic friction is measured at a force of 10-110mN and at a speed of 600mm/s.

Preferably the transparent substrate is directly or indirectly coated on at least a portion of the major surface thereof with at least one layer, such that, when said at least one layer is present, references to said at least one portion of the major surface of the transparent substrate in the fourth aspect are to be construed as references to an external surface of said at least one layer. Preferably said at least one layer coats at least a portion of the first area. More preferably said at least one layer coats substantially all or all of the first area. In the context of the present invention the term "substantially all" means at least 80%, preferably at least 85%, more preferably at least 90%, even more preferably at least 92.5%, even more preferably at least 95%, even more preferably at least 97.5%, most preferably at least 99%.

Preferably said at least one layer coats substantially all or all of said at least part of said second area. Preferably said at least one layer coats substantially all or all of said second area. Preferably the composition of the at least one layer in the area of at least part of or all of the second area differs from the composition of the at least one layer outside the area of at least part of or all of the second area.

At least part of or all of the second area may be coated with a further layer, deposited on the at least one layer. Preferably the composition of the further layer in the area of at least part of or all of the second area differs from the composition of the at least one layer outside the area of at least part of or all of the second area.

Preferably said at least one layer and/or said further layer is based on silica and/or an organo silica. Preferably the at least one layer and/or said further layer based on silica and/or an organo silica is obtained by partially or completely converting at least one layer based on one or more silazane. In an alternative embodiment, said further layer based on silica and/or an organo silica is obtained by deposition using a precursor based on one or more of silane, tertraethyl orthosilicate (TEOS), and/or hexamethyldisiloxane (HMDSO). Silica and/or organo silica layers that are derived from silazanes are generally denser and smoother than silica and/or an organo silica layers that are derived from the use of the above-mentioned precursors. Said precursors may be used in a Chemical Vapour Deposition (CVD) and/or sol gel process.

The first area may comprise a plurality of areas. Additionally or alternatively the second area may comprise a plurality of areas. For example the second area may comprise an area that the part of the wiping means contacts when in the first position and an area that the part of the wiping means contacts when in the second position.

The second area may comprise one or more rectangular, oval and/or elliptical areas. Said rectangular areas may have one or more rounded edges. Preferably the second area has a longest dimension of at least 20cm, more preferably at least 30cm, even more preferably at least 40cm, even more preferably at least 50cm, most preferably at least 60cm, but preferably at most 100cm, more preferably at most 90cm, even more preferably at most 80cm, most preferably at most 70cm.

Preferably the coefficient of kinetic friction between a contact surface of said part of said wiping means and said major surface located in at least part of said second area of said major surface is at least 10% higher, more preferably at least 20% higher, even more preferably at least 30% higher, most preferably at least 50% higher, than the coefficient of friction between a contact surface of said part of said wiping means and said major surface located in at least part of said first area that does not occupy the same area as said at least part of said second area.

Preferably said at least one layer and/or said further layer has a thickness of at least 1 nm, more preferably at least 5 nm, even more preferably at least 10 nm, most preferably at least 15 nm; but preferably at most 100 nm, more preferably at most 35 nm, even more preferably at most 30 nm, most preferably at most 27 nm.

Preferably said wiping means comprises an arm attached at a first end to a wiper blade. The wiping means may be driven by a pivoting of said arm at an opposing second end, resulting in said reciprocating motion. Preferably the contact surface of said part of said wiping means comprises an elastomer. Preferably the contact surface of said part of said wiping means comprises at least part of a wiper blade. Preferably said elastomer is a rubber, such as a synthetic or natural rubber. The synthetic rubber may comprise EPDM rubber (ethylene propylene diene monomer (M-class) rubber). Said elastomer may be coated, for example said elastomer may be coated with graphite. Said elastomer may be blended with a non-elastomer, for instance said elastomer may be blended with graphite.

The major surface located in at least part of said second area of said major surface may have an arithmetical mean height of the surface value, Sa, of preferably at least 0.3 nm, more preferably at least 1 nm, even more preferably at least 3 nm, most preferably at least 5 nm, but preferably at most 15 nm, more preferably at most 10 nm, even more preferably at most 9 nm, even more preferably at most 8 nm, most preferably at most 7 nm.

The coefficient of friction between the major surface located in at least part of said first area of said major surface and a contact surface of a wiping means, in a wet and/or dry state, at a force of 10-110mN and at a speed of 600mm/s, is preferably at least 0.1, more preferably at least 0.2, even more preferably at least 0.3, most preferably at least 0.4, but preferably at most 10, more preferably at most 5, even more preferably at most 1, even more preferably at most 0.8, most preferably at most 0.6. Preferably the coefficient of friction between the major surface located in at least part of said first area of said major surface and a contact surface of a wiping means does not change between a wet and a dry state by more than 50%, more preferably by more than 30%, even more preferably by more than 20%, even more preferably by more than 10%, most preferably by more than 5%. Said contact surface of a wiping means may comprise an elastomer. Said elastomer may be at least part of a blade of a wiper. Preferably said elastomer is a rubber, such as a synthetic or natural rubber. The synthetic rubber may comprise EPDM rubber (ethylene propylene diene monomer (M-class) rubber). Said elastomer may be coated, for example said elastomer may be coated with graphite. Said elastomer may be blended with a non-elastomer, for instance said elastomer may be blended with graphite.

The transparent substrate may be directly or indirectly coated on the major surface thereof with an underlayer, wherein said underlayer is located between said major surface of the transparent substrate and said at least one layer. Preferably said transparent substrate is in direct contact with said underlayer. Preferably said underlayer is in direct contact with said at least one layer.

The underlayer preferably comprises at least one layer based on a transparent conductive coating (TCC). Preferably the TCC is a transparent conductive oxide (TCO). Preferably the TCO is one or more of fluorine doped tin oxide (SnO₂:F), zinc oxide doped with aluminium, gallium or boron (ZnO:Al, ZnO:Ga, ZnO:B), indium oxide doped with tin (ITO), cadmium stannate, ITO:ZnO, ITO:Ti, In₂O₃, In₂O₃-ZnO (IZO), In₂O₃:Ti, In₂O₃:Mo, In₂O₃:Ga, In₂O₃:W, In₂O₃:Zr, In₂O₃:Nb, In₂₋₂ₓMₓSnₓO₃ with M being Zn or Cu, ZnO:F, Zn_{0.9}Mg_{0.1}O:Ga, (Zn,Mg)O:P, ITO:Fe, SnO₂:Co, In₂O₃:Ni, In₂O₃:(Sn,Ni), ZnO:Mn, and/or ZnO:Co.

The glazing may curved and/or bent. Preferably the glazing is a vehicle glazing, such as a vehicle windscreen or a vehicle backlight.

The glazing according to the fourth aspect may comprise any feature of the glazing according to the first aspect.

According to a fifth aspect of the present invention there is provided the combination of the glazing of the fourth aspect with a wiping means.

According to a sixth aspect of the present invention there is provided the use of the glazing of the fourth aspect to facilitate a reciprocating motion of a part of a wiping means and/or to facilitate a tilting and/or flipping of a part of a wiping means.

Preferably said part of a wiping means comprises at least part of a wiper blade. Preferably said at least part of a wiper blade comprises an elastomer. Preferably said elastomer is a rubber, such as a synthetic or natural rubber. The synthetic rubber may comprise EPDM rubber (ethylene propylene diene monomer (M-class) rubber). Said elastomer may be coated, for example said elastomer may be coated with graphite. Said elastomer may be blended with a non-elastomer, for instance said elastomer may be blended with graphite.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

All of the features disclosed in this specification (including any accompanying claims, abstract and drawings), and/or all of the steps of any method or process so disclosed, may be combined in any combination, except combinations where at least some of such features and/or steps are mutually exclusive.

The invention will now be further described by way of the following specific embodiments, which are given by way of illustration and not of limitation, with reference to the accompanying drawings in which:
**Fig. 1** is a schematic plan view of a combination of a glazing of the present invention and two wipers that are configured to move in parallel; and
**Fig. 2** is a schematic plan view of a combination of a glazing of the present invention and two wipers that are configured to move in opposing directions.

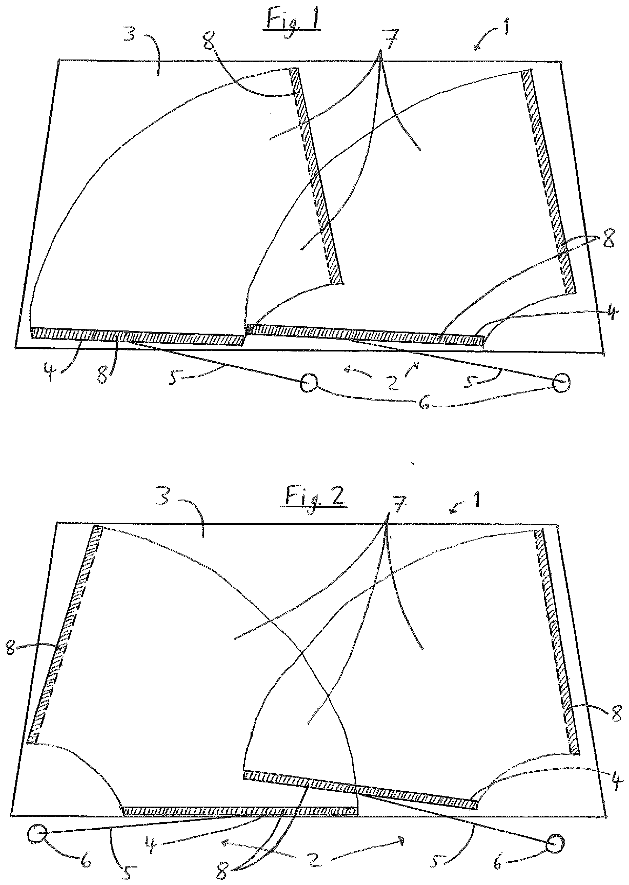

Fig. 1 shows a vehicle glazing 1, specifically a windscreen, according to the present invention combined with a wiping means 2. Glazing 1 is coated on an external major surface 3 with a layer of silica that covers the entirety of surface 3. Wiping means 2 comprises two wiper blades 4, two wiper arms 5, two rotatable shafts 6 and a motor (not shown). Each wiper blade 4 is attached to a first end of a different wiper arm 5. Each wiper arm 5 is attached at an opposing second end to a different rotatable shaft 6. The two wiper blades 4 both contact surface 3.

In use, the motor rotates the shafts 6 such that their motion is synchronised, causing wiper arms 5 and consequently wiper blades 4 to move in parallel/unison. Shafts 6 rotate alternately in a clockwise and in a counter-clockwise sense which causes the wiper blades 4 to move in a reciprocating motion over surface 3, wiping first area 7. The wiper blades 4 wipe first area 7 of said major surface 3 by moving between a first position and a second position. The hatched areas in Fig. 1 represent the surface 3 of the glazing 1 in the regions of these first and second positions which together comprise second area 8. The silica layer at the surface 3 in second area 8 differs from the rest of the silica layer in first area 7 in that it is deposited using an organo silane precursor. This arrangement ensures a greater coefficient of kinetic friction between the surface 3 in the second area 8 and the rubber of the wiper blades 4, than between the surface 3 in the rest of the first area 7 and said rubber. This arrangement encourages the tilting and/or flipping of the wiper blades 4 when they change direction i.e. when the wiper blades 4 are in the first or second position, contacting second area 8. The coefficient of friction between surface 3 in first area 7 (including second area 8) and the rubber of the wiper blades 4 does not substantially change between a dry state and a wet state.

Fig. 2 shows another vehicle glazing 1, specifically a windscreen, according to the present invention combined with an alternative wiping means 2. The reference numerals associated with features in Fig. 1 are also used for corresponding features in Fig. 2. The wiping means 2 of Fig. 2 differs from that of Fig. 1 in that, in use, the motor of the wiping means of Fig. 2 rotates the shafts 6 in opposite directions (clockwise and counter-clockwise), causing wiper arms 5 and consequently wiper blades 4 to move in opposing directions. Again, shafts 6 rotate alternately in a clockwise and in a counter-clockwise sense which causes the wiper blades 4 to move in a reciprocating motion over surface 3, wiping first area 7.

Fig. 1 and Fig. 2 exemplify two different modes of operation for wiping means and there are of course several other types of wiping means that could be used in combination with the present invention such as single-blade systems, pantograph systems, and complex arc systems.

### Examples

Four samples of 2.2mm thick Pilkington Energy Advantage (RTM) glass were each coated (on the coated side) with a layer of perhydropolysilazane which was then converted to a layer of silica by heating the samples at 200 °C for 1 hr. The silica layers deposited on the four samples had respective thicknesses of 25nm, 50nm, 100nm and 150nm. These four samples, plus a reference sample of 2.2mm thick Pilkington Energy Advantage (RTM) glass that has not been coated or treated, then underwent coefficient of kinetic friction tests.

The tests were carried out under dry and wet conditions using a Bosch Superplus 24 (RTM) wiper blade that was cut to a length of 19mm. A CSM Micro-Combi Tester (RTM) was used in scratch mode to perform the friction tests and a load of 10-110mN was applied by the wiper blade upon the coated side of the sample. The tests were performed over a length of 65mm and at a speed of 600mm/min.

For each sample a separate 19mm wiper blade was glued to a glass disc which was fixed to the end of an indenter holder of the CSM Micro-Combi Tester (RTM). Prior to testing, the samples were cleaned using an aerosol solvent spray followed by de-ionised water and finally removal of any debris with a Dust Off (RTM) aerosol spray. For the wet tests a pool of de-ionised water of approximately 2ml volume was applied to the sample surface. Five runs were conducted for each test and the results were averaged, using data obtained between 10 and 60mm of travel avoiding the effects of load variations at the start and end of each test.

**Table 1: Coefficient of kinetic friction values, under wet or dry conditions, between a wiper blade and each of five samples, including a reference sample (2.2mm thick Pilkington Energy Advantage (RTM) glass) and four samples that bear a silica topcoat of differing thicknesses.**

| | **Coefficient of Kinetic Friction** | |
|---|---|---|
| **Sample** | **Dry State** | **Wet State** |
| **Reference (no top silica layer)** | 1.23 | 0.75 |
| **25nm silica topcoat** | 0.44 | 0.44 |
| **50nm silica topcoat** | 1.35 | 0.50 |
| **100nm silica topcoat** | 2.30 | 0.50 |
| **150nm silica topcoat** | 3.22 | 0.54 |

As Table 1 above shows, the sample with a 25nm thick silica topcoat derived from a layer of perhydropolysilazane exhibited a coefficient of kinetic friction between the surface of the silica topcoat and a contact surface of the wiper blade that does not change between a dry state and a wet state. In contrast, the other tested samples exhibited reductions in the coefficient of kinetic friction upon changing from a dry state to a wet state. Furthermore, the sample with a 25nm thick silica topcoat exhibits coefficients of friction in the desirable range of 0.4-0.6 which is beneficial in terms of noise reduction, water removal efficiency, and smoothness of travel, resulting in reduced wiper blade erosion and extended lifetime.

## Claims

1. A coated glazing comprising:
a transparent substrate directly or indirectly coated on a major surface thereof with at least one layer based on silica and/or an organo silica,
wherein the at least one layer based on silica and/or an organo silica has a thickness of at least 5 nm but at most 45 nm, and
wherein the at least one layer based on silica and/or an organo silica is obtained by partially or completely converting at least one layer based on one or more silazane; and wherein the coefficient of kinetic friction between an exterior surface of the at least one layer based on silica and/or an organo silica and a contact surface of a wiping means does not change between a wet and a dry state by more than 50%.

2. The coated glazing according to claim 1, wherein said at least one layer based on silica and/or an organo silica has a thickness of at least 10 nm, but at most 40 nm.

3. The coated glazing according to claim 1 or claim 2, wherein the coefficient of kinetic friction between the exterior surface of the at least one layer based on silica and/or an organo silica and the contact surface of the wiping means, in a wet and/or dry state, at a force of 10-110mN and at a speed of 600mm/s, is at least 0.1, but at most 5; preferably the coefficient of kinetic friction between the exterior surface of the at least one layer based on silica and/or an organo silica and a contact surface of a the wiping means, in a wet and/or dry state, at a force of 10-110mN and at a speed of 600mm/s, is at least 0.4, but at most 0.8.

4. The coated glazing according to any preceding claim, wherein the coefficient of kinetic friction between an exterior surface of the layer based on silica and/or an organo silica and a contact surface of a wiping means does not change between a wet and a dry state by more than 30%.

5. The coated glazing according to any preceding claim, wherein the transparent substrate is directly or indirectly coated with an underlayer, wherein said underlayer is located between said major surface of the transparent substrate and said at least one layer based on silica and/or an organo silica; and wherein the underlayer comprises at least one layer based on a transparent conductive coating (TCC).

6. The coated glazing according to any preceding claim, wherein the exterior surface of the at least one layer based on silica and/or an organo silica comprises an arithmetic mean height of the surface value, Sa of at most 15nm.

7. A method of manufacturing a coated glazing according to any of claims 1 to 6 comprising:
depositing at least one layer based on one or more silazane on a major surface of a transparent substrate by spin coating, slot die coating, spraying such as flame spray coating, roller coating, dipping, and/or printing ,
partially or completely converting the at least one layer based on one or more silazane to at least one layer based on silica and/or an organo silica, and
wherein the at least one layer based on silica and/or an organo silica has a thickness of at least 5 nm but at most 45 nm.

8. The method according to claim 7, wherein said partial or complete conversion of the at least one layer based on one or more silazane to at least one layer based on silica and/or an organo silica comprises treating the transparent substrate with heat, UV radiation and/or IR radiation after depositing the at least one layer based on one or more silazane.

9. Use of a coated glazing according to any of claims 1 to 6, in combination with a wiping means, wherein said major surface of said transparent substrate, coated with said at least one layer, comprises a first area and a second area;
wherein, in use, said wiping means wipes said first area of said major surface as a result of a part of said wiping means moving between a first position and a second position in a reciprocating motion, and
wherein, when said part of said wiping means is in the first position and/or when said part of said wiping means is in the second position, said part contacts said second area of said major surface, and
wherein the coefficient of kinetic friction between a contact surface of said part of said wiping means and said major surface located in at least part of said second area of said major surface is higher than the coefficient of kinetic friction between the contact surface of said part of said wiping means and said major surface located in at least part of said first area, and wherein said first area does not occupy the same area as said at least part of said second area, and wherein use of the coated glazing facilitates the reciprocating motion of said part of said wiping means and/or facilitate a tilting and/or flipping of said part of said wiping means.

10. Use of a coated glazing according to claim 9, wherein said at least one layer coats at least a portion of the first area, preferably said at least one layer coats substantially all or all of the first area; and/or,
wherein said at least one layer coats substantially all or all of said at least part of said second area; and/or
wherein said at least one layer coats substantially all or all of said second area; and/or
wherein the composition of the at least one layer in the area of the at least part of, or all of, the second area differs from the composition of the at least one layer outside the area of the at least part of, or all of, the second area.

11. Use of a coated glazing according to claim 9 or 10, wherein the at least part of, or all of, the second area is coated with a further layer, deposited on the at least one layer; and/or
wherein the composition of the further layer in the area of the at least part of, or all of, the second area differs from the composition of the at least one layer outside the area of the at least part of, or all of, the second area; and/or
wherein said at least one layer and/or said further layer is based on silica and/or an organo silica.

12. Use of a coated glazing according to claim 11, wherein the at least one layer and/or said further layer based on silica and/or an organo silica is obtained by partially or completely converting at least one layer based on one or more silazane; and/or
wherein said further layer based on silica and/or an organo silica is obtained by deposition using a precursor based on one or more of silane, tertraethyl orthosilicate (TEOS), and/or hexamethyldisiloxane (HMDSO).

13. Use of a coated glazing according to any one of claims 9 to 12, wherein the coefficient of kinetic friction between the contact surface of said part of said wiping means and said major surface located in at least said part of said second area of said major surface is 10% higher, than the coefficient of kinetic friction between the contact surface of said part of said wiping means and said major surface located in at least part of said first area that does not occupy the same area as said at least part of said second area; and/or wherein said at least one layer and/or said further layer when present has a thickness of at least at least 5 nm, but at most 100 nm.

14. Use of a coated glazing according to any one of claims 9 to 13, wherein the coefficient of kinetic friction between the major surface located in at least part of said first area of said major surface and the contact surface of said wiping means, in a wet and/or dry state, at a force of 10-110mN and at a speed of 600mm/s, is at least 0.1, but at most 1; and/or,
wherein the coefficient of kinetic friction between the major surface located in at least part of said first area of said major surface and a contact surface of a wiping means, does not change between a wet and a dry state by more than 50%, preferably by more than 30%.

15. Use of a coated glazing according to any one of claims 9 to 14 as a vehicle glazing, such as a vehicle windscreen or a vehicle backlight.

## Patentansprüche

1. Beschichtetes Glas, umfassend:
ein transparentes Substrat, das direkt oder indirekt auf einer Hauptoberfläche davon mit mindestens einer Schicht auf der Basis von Siliziumdioxid und/ oder einem Organosiliziumdioxid beschichtet ist,
wobei die mindestens eine Schicht auf der Basis von Siliziumdioxid und/oder einem organischen Siliziumdioxid eine Dicke von mindestens 5 nm, aber höchstens 45 nm aufweist, und
wobei die mindestens eine Schicht auf der Basis von Siliziumdioxid und/oder einem Organosiliziumdioxid durch teilweise oder vollständige Umwandlung mindestens einer Schicht auf der Basis von einem oder mehreren Silazanen erhalten ist; und wobei sich der Gleitreibungskoeffizient zwischen einer Außenfläche der mindestens einen Schicht auf der Basis von Siliziumdioxid und/ oder einem Organosiliziumdioxid und einer Kontaktfläche einer Wischeinrichtung zwischen einem nassen und einem trockenen Zustand um nicht mehr als 50% ändert.

2. Beschichtetes Glas nach Anspruch 1, bei dem die mindestens eine Schicht auf Basis von Siliziumdioxid und/oder einem Organosiliziumdioxid eine Dicke von mindestens 10 nm, aber höchstens 40 nm aufweist.

3. Beschichtetes Glas nach Anspruch 1 oder Anspruch 2, bei dem der Gleitreibungskoeffizient zwischen der Außenfläche der mindestens einen Schicht auf Basis von Siliziumdioxid und/oder einem Organosiliziumdioxid und der Kontaktfläche der Wischeinrichtung im nassen und/oder trockenen Zustand bei einer Kraft von 10-110 mN und einer Geschwindigkeit von 600 mm/s mindestens 0,1, aber höchstens 5 beträgt; dass vorzugsweise der Gleitreibungskoeffizient zwischen der äußeren Oberfläche der mindestens einen Schicht auf der Basis von Siliziumdioxid und/oder einem Organosiliziumdioxid und einer Kontaktfläche der Wischeinrichtung im nassen und/oder trockenen Zustand bei einer Kraft von 10-110 mN und einer Geschwindigkeit von 600 mm/s mindestens 0,4, aber höchstens 0,8 beträgt.

4. Beschichtetes Glas nach einem der vorhergehenden Ansprüche, bei dem sich der Gleitreibungskoeffizient zwischen einer Außenfläche der Schicht auf Basis von Siliziumdioxid und/ oder Organosiliziumdioxid und einer Kontaktfläche einer Wischeinrichtung zwischen einem nassen und einem trockenen Zustand um nicht mehr als 30% ändert.

5. Beschichtetes Glas nach einem der vorhergehenden Ansprüche, bei dem das transparente Substrat direkt oder indirekt mit einer Unterschicht beschichtet ist, wobei die Unterschicht zwischen der Hauptoberfläche des transparenten Substrats und der mindestens einen Schicht auf der Basis von Siliziumdioxid und/oder einem Organosiliziumdioxid angeordnet ist; und bei dem die Unterschicht mindestens eine Schicht auf der Basis einer transparenten leitfähigen Beschichtung (TCC) umfasst.

6. Beschichtetes Glas nach einem der vorhergehenden Ansprüche, bei dem die Außenfläche der mindestens einen Schicht auf der Basis von Siliziumdioxid und/oder einem Organosiliziumdioxid eine arithmetische mittlere Höhe des Oberflächenwerts Sa von höchstens 15nm aufweist.

7. Verfahren zur Herstellung eines beschichteten Glases nach einem der Ansprüche 1 bis 6, umfassend:
Abscheiden mindestens einer Schicht auf Basis eines oder mehrerer Silazane auf einer Hauptoberfläche eines transparenten Substrats durch Schleuderbeschichtung, Schlitzdüsenbeschichtung, Sprühen wie Flammenspritzbeschichtung, Walzenbeschichtung, Tauchen und/oder Drucken ,
teilweises oder vollständiges Umwandeln der mindestens einen Schicht auf Basis eines oder mehrerer Silazane in mindestens eine Schicht auf Basis von Siliziumdioxid und/oder einem Organosiliziumdioxid, und
wobei die mindestens eine Schicht auf Basis von Siliziumdioxid und/oder einem Organosiliziumdioxid eine Dicke von mindestens 5 nm aber höchstens 45 nm aufweist.

8. Verfahren nach Anspruch 7, bei dem die teilweise oder vollständige Umwandlung der mindestens einen Schicht auf Basis eines oder mehrerer Silazane in mindestens eine Schicht auf Basis von Siliciumdioxid und/oder einem Organosiliziumdioxid das Behandeln des transparenten Substrats mit Wärme, UV-Strahlung und/oder IR-Strahlung nach dem Aufbringen der mindestens einen Schicht auf Basis eines oder mehrerer Silazane umfasst.

9. Verwendung eines beschichteten Glases nach einem der Ansprüche 1 bis 6 in Kombination mit einer Wischeinrichtung, wobei die Hauptoberfläche des transparenten Substrats, das mit der mindestens einen Schicht beschichtet ist, einen ersten Bereich und einen zweiten Bereich umfasst;
wobei im Gebrauch die Wischeinrichtung als Ergebnis einer Bewegung eines Teils der Wischeinrichtung zwischen einer ersten Position und einer zweiten Position in einer Hin- und Herbewegung den ersten Bereich der Hauptoberfläche wischt, und
wobei, wenn der Teil der Wischeinrichtung in der ersten Position ist und/oder wenn der Teil der Wischeinrichtung in der zweiten Position ist, dieser Teil den zweiten Bereich der Hauptoberfläche berührt, und
wobei der Gleitreibungskoeffizient zwischen einer Kontaktfläche des Teils der Wischeinrichtung und der Hauptoberfläche, die sich in zumindest einem Teil des zweiten Bereichs der Hauptoberfläche befindet, höher ist als der Gleitreibungskoeffizient zwischen der Kontaktfläche des Teils der Wischeinrichtung und der Hauptfläche, die sich in zumindest einem Teil des ersten Bereichs befindet, und wobei der erste Bereich nicht die gleiche Fläche einnimmt wie zumindest der Teil des zweiten Bereichs, und wobei die Verwendung der beschichteten Verglasung die Hin- und Herbewegung des Teils der Wischeinrichtung erleichtert und/oder ein Kippen und/oder Wenden des Teils der Wischeinrichtung erleichtert.

10. Verwendung eines beschichteten Glases nach Anspruch 9, wobei die mindestens eine Schicht mindestens einen Teil des ersten Bereichs beschichtet, und vorzugsweise die mindestens eine Schicht im Wesentlichen den gesamten ersten Bereich beschichtet; und/oder
wobei die mindestens eine Schicht im Wesentlichen den gesamten oder einen Teil des zweiten Bereichs beschichtet; und/oder
wobei die mindestens eine Schicht im Wesentlichen den gesamten oder einen Teil des zweiten Bereichs beschichtet; und/oder
wobei sich die Zusammensetzung der mindestens einen Schicht im Bereich des mindestens einen Teils des zweiten Bereichs oder des gesamten zweiten Bereichs von der Zusammensetzung der mindestens einen Schicht außerhalb des Bereichs des mindestens einen Teils des zweiten Bereichs oder des gesamten zweiten Bereichs unterscheidet.

11. Verwendung eines beschichteten Glases nach Anspruch 9 oder 10, wobei wenigstens der Teil des zweiten Bereiches oder der gesamte zweite Bereich mit einer weiteren Schicht beschichtet ist, die auf der mindestens einen Schicht abgeschieden ist; und/oder
wobei sich die Zusammensetzung der weiteren Schicht im Bereich des mindestens einen Bereichs oder dem gesamten zweiten Bereich von der Zusammensetzung der mindestens einen Schicht außerhalb des Bereichs des mindestens einen Bereichs oder des gesamten zweiten Bereichs unterscheidet; und/oder
wobei die mindestens eine Schicht und/oder die weitere Schicht auf Siliziumdioxid und/oder einem Organosiliziumdioxid basiert.

12. Verwendung eines beschichteten Glases nach Anspruch 11,
wobei die mindestens eine Schicht und/oder die weitere Schicht auf Basis von Siliziumdioxid und/ oder einem Organosiliziumdioxid durch teilweise oder vollständige Umwandlung mindestens einer Schicht auf Basis von einem oder mehreren Silazanen erhalten ist; und/oder
wobei die weitere Schicht auf Basis von Siliziumdioxid und/oder einem Organosiliziumdioxid durch Abscheidung unter Verwendung eines Vorläufers auf Basis von einem oder mehreren von Silan, Tetraethylorthosilikat (TEOS) und/oder Hexamethyldisiloxan (HMDSO) erhalten ist.

13. Verwendung eines beschichteten Glases nach einem der Ansprüche 9 bis 12, wobei der Gleitreibungskoeffizient zwischen der Kontaktfläche des Teils der Wischeinrichtung und der Hauptoberfläche, die sich in mindestens dem Teil des zweiten Bereichs der Hauptoberfläche befindet, 10 % höher ist als der Gleitreibungskoeffizient zwischen der Kontaktfläche des Teils der Wischeinrichtung und der Hauptoberfläche, die sich in mindestens einem Teil des ersten Bereichs befindet, der nicht dieselbe Fläche wie der mindestens eine Teil des zweiten Bereichs einnimmt; und/oder wobei die mindestens eine Schicht und/oder, wenn vorhanden, die weitere Schicht eine Dicke von mindestens 5 nm, aber höchstens 100 nm aufweist.

14. Verwendung eines beschichteten Glases nach einem der Ansprüche 9 bis 13, wobei der Gleitreibungskoeffizient zwischen der Hauptoberfläche, die sich zumindest in einem Teil des ersten Bereichs der Hauptoberfläche befindet, und der Kontaktfläche der Wischeinrichtung im nassen und/oder trockenen Zustand bei einer Kraft von 10-110mN und einer Geschwindigkeit von 600mm/s mindestens 0,1, jedoch höchstens 1 beträgt; und/oder
wobei der Gleitreibungskoeffizient zwischen der Hauptoberfläche, die sich zumindest in einem Teil des ersten Bereichs der Hauptoberfläche befindet, und einer Kontaktfläche einer Wischeinrichtung sich zwischen einem nassen und einem trockenen Zustand um nicht mehr als 50 %, vorzugsweise um nicht mehr als 30 %, ändert.

15. Verwendung eines beschichteten Glases nach einem der Ansprüche 9 bis 14 als Fahrzeugverglasung, wie z.B. eine Fahrzeugwindschutzscheibe oder ein Fahrzeugrücklicht.

## Revendications

1. Vitrage revêtu comprenant:
un substrat transparent revêtu directement ou indirectement sur une surface principale de celui-ci d'au moins une couche à base de silice et/ou d'une organosilice,
dans lequel la au moins une couche à base de silice et/ou d'une organosilice a une épaisseur d'au moins 5 nm mais d'au plus 45 nm, et
dans lequel la au moins une couche à base de silice et/ou d'une organosilice est obtenue par conversion partielle ou totale d'au moins une couche à base d'un ou plusieurs silazanes; et dans lequel le coefficient de frottement cinétique entre une surface extérieure de la au moins une couche à base de silice et/ou d'une organosilice et une surface de contact d'un moyen d'essuyage ne change pas entre un état humide et un état sec de plus de 50 %.

2. Vitrage revêtu selon la revendication 1, dans lequel ladite au moins une couche à base de silice et/ou d'une organosilice a une épaisseur d'au moins 10 nm, mais d'au plus 40 nm.

3. Vitrage revêtu selon la revendication 1 ou la revendication 2, dans lequel le coefficient de frottement cinétique entre la surface extérieure de la au moins une couche à base de silice et/ou d'une organosilice et la surface de contact du moyen d'essuyage, dans un état humide et/ou sec, à une force de 10-110 mN et à une vitesse de 600 mm/s, est d'au moins 0,1, mais d'au plus 5; de préférence le coefficient de frottement cinétique entre la surface extérieure de la au moins une couche à base de silice et/ou d'une organosilice et une surface de contact du moyen d'essuyage, dans un état humide et/ou sec, à une force de 10-110 mN et à une vitesse de 600 mm/s, est d'au moins 0,4, mais d'au plus 0,8.

4. Vitrage revêtu selon l'une quelconque des revendications précédentes, dans lequel le coefficient de frottement cinétique entre une surface extérieure de la couche à base de silice et/ou d'une organosilice et une surface de contact d'un moyen d'essuyage ne change pas entre un état humide et un état sec de plus de 30 %.

5. Vitrage revêtu selon l'une quelconque des revendications précédentes, dans lequel le substrat transparent est revêtu directement ou indirectement d'une sous-couche, dans lequel ladite sous-couche est située entre ladite surface principale du substrat transparent et ladite au moins une couche à base de silice et/ou d'une organosilice; et dans lequel la sous-couche comprend au moins une couche à base d'un revêtement conducteur transparent (RCT).

6. Vitrage revêtu selon l'une quelconque des revendications précédentes, dans lequel la surface extérieure de la au moins une couche à base de silice et/ou d'une organosilice comprend une hauteur moyenne arithmétique de la valeur de surface, Sa d'au plus 15 nm.

7. Procédé de fabrication d'un vitrage revêtu selon l'une quelconque des revendications 1 à 6 comprenant:
le dépôt d'au moins une couche à base d'un ou plusieurs silazanes sur une surface principale d'un substrat transparent par revêtement par centrifugation, revêtement par filière, pulvérisation telle que revêtement par pulvérisation à la flamme, revêtement au rouleau, trempage et/ou impression,
la conversion partielle ou totale de la au moins une couche à base d'un ou plusieurs silazanes en au moins une couche à base de silice et/ou d'une organosilice, et
dans lequel la au moins une couche à base de silice et/ou d'une organosilice a une épaisseur d'au moins 5 nm mais d'au plus 45 nm.

8. Procédé selon la revendication 7, dans lequel ladite conversion partielle ou totale de la au moins une couche à base d'un ou plusieurs silazanes en au moins une couche à base de silice et/ou d'une organosilice comprend le traitement du substrat transparent avec de la chaleur, un rayonnement UV et/ou un rayonnement IR après dépôt de la au moins une couche à base d'un ou plusieurs silazanes.

9. Utilisation d'un vitrage revêtu selon l'une quelconque des revendications 1 à 6, en combinaison avec un moyen d'essuyage, dans laquelle ladite surface principale dudit substrat transparent, revêtu de ladite au moins une couche, comprend une première zone et une seconde zone;
dans laquelle, en cours d'utilisation, ledit moyen d'essuyage essuie ladite première zone de ladite surface principale du fait qu'une partie dudit moyen d'essuyage se déplace entre une première position et une seconde position dans un mouvement de va-et-vient, et
dans laquelle, lorsque ladite partie dudit moyen d'essuyage est dans la première position et/ou lorsque ladite partie dudit moyen d'essuyage est dans la seconde position, ladite partie est en contact avec ladite seconde zone de ladite surface principale, et
dans laquelle le coefficient de frottement cinétique entre une surface de contact de ladite partie dudit moyen d'essuyage et ladite surface principale située dans au moins une partie de ladite seconde zone de ladite surface principale est supérieur au coefficient de frottement cinétique entre la surface de contact de ladite partie dudit moyen d'essuyage et ladite surface principale située dans au moins une partie de ladite première zone, et dans laquelle ladite première zone n'occupe pas la même zone que ladite au moins partie de ladite seconde zone,
et dans laquelle l'utilisation du vitrage revêtu facilite le mouvement de va-et-vient de ladite partie dudit moyen d'essuyage et/ou facilite une inclinaison et/ou un basculement de ladite partie dudit moyen d'essuyage.

10. Utilisation d'un vitrage revêtu selon la revendication 9, dans laquelle ladite au moins une couche revêt au moins une partie de la première zone, de préférence ladite au moins une couche revêt sensiblement la totalité ou la totalité de la première zone; et/ou,
dans laquelle ladite au moins une couche revêt sensiblement la totalité ou la totalité de ladite au moins partie de ladite seconde zone; et/ou
dans laquelle ladite au moins une couche revêt sensiblement la totalité ou la totalité de ladite seconde zone; et/ou
dans laquelle la composition de la au moins une couche dans la zone de la au moins une partie de, ou de la totalité de, la seconde zone diffère de la composition de la au moins une couche en dehors de la zone de la au moins une partie de, ou de la totalité de, la seconde zone.

11. Utilisation d'un vitrage revêtu selon la revendication 9 ou 10, dans laquelle la au moins une partie de, ou la totalité de, la seconde zone est revêtue d'une couche supplémentaire, déposée sur la au moins une couche; et/ou
dans laquelle la composition de la couche supplémentaire dans la zone de la au moins une partie de, ou de la totalité de, la seconde zone diffère de la composition de la au moins une couche en dehors de la zone de la au moins une partie de, ou de la totalité de, la seconde zone; et/ou
dans laquelle ladite au moins une couche et/ou ladite couche supplémentaire est à base de silice et/ou d'une organosilice.

12. Utilisation d'un vitrage revêtu selon la revendication 11, dans laquelle la au moins une couche et/ou ladite couche supplémentaire à base de silice et/ou d'une organosilice est obtenue par conversion partielle ou totale d'au moins une couche à base d'un ou plusieurs silazanes; et/ou
dans laquelle ladite couche supplémentaire à base de silice et/ou d'une organosilice est obtenue par dépôt au moyen d'un précurseur à base d'un ou plusieurs parmi le silane, l'orthosilicate de tétraéthyle (TEOS) et/ou l'hexaméthyldisiloxane (HMDSO).

13. Utilisation d'un vitrage revêtu selon l'une quelconque des revendications 9 à 12, dans laquelle le coefficient de frottement cinétique entre la surface de contact de ladite partie dudit moyen d'essuyage et ladite surface principale située dans au moins ladite partie de ladite seconde zone de ladite surface principale est supérieur de 10 % au coefficient de frottement cinétique entre la surface de contact de ladite partie dudit moyen d'essuyage et ladite surface principale située dans au moins une partie de ladite première zone qui n'occupe pas la même zone que ladite au moins partie de ladite seconde zone; et/ou dans laquelle ladite au moins une couche et/ou ladite couche supplémentaire lorsqu'elle est présente a une épaisseur d'au moins 5 nm, mais d'au plus 100 nm.

14. Utilisation d'un vitrage revêtu selon l'une quelconque des revendications 9 à 13, dans laquelle le coefficient de frottement cinétique entre la surface principale située dans au moins une partie de ladite première zone de ladite surface principale et la surface de contact dudit moyen d'essuyage, dans un état humide et/ou sec, à une force de 10-110 mN et à une vitesse de 600 mm/s, est d'au moins 0,1, mais d'au plus 1; et/ou,
dans laquelle le coefficient de frottement cinétique entre la surface principale située dans au moins une partie de ladite première zone de ladite surface principale et une surface de contact d'un moyen d'essuyage, ne change pas entre un état humide et un état sec de plus de 50 %, de préférence de plus de 30 %.

15. Utilisation d'un vitrage revêtu selon l'une quelconque des revendications 9 à 14 comme vitrage de véhicule, tel qu'un pare-brise de véhicule ou une lunette arrière de véhicule.
